(19) Europäisches Patentamt
European Patent Office
Office européen des brevets

(11) **EP 2 682 805 A2**

(12) **EUROPEAN PATENT APPLICATION**
published in accordance with Art. 153(4) EPC

(43) Date of publication:
**08.01.2014 Bulletin 2014/02**

(51) Int Cl.:
***G02B 27/22*** *(2006.01)* ***H04N 13/04*** *(2006.01)*

(21) Application number: **12755088.7**

(22) Date of filing: **02.03.2012**

(86) International application number:
**PCT/KR2012/001588**

(87) International publication number:
**WO 2012/121520 (13.09.2012 Gazette 2012/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.03.2011 US 201161449221 P**

(71) Applicant: **Samsung Electronics Co., Ltd.**
**Suwon-si, Gyeonggi-do 443-742 (KR)**

(72) Inventors:
• **SHESTAK, Sergey**
  **Suwon-si**
  **Gyeonggi-do 443-744 (KR)**

• **KIM, Dae-sik**
  **Hwaseong-si**
  **Gyeonggi-do 445-753 (KR)**
• **Cha, Kyung-hoon**
  **Yongin-si**
  **Gyeonggi-do (KR)**

(74) Representative: **Tindall, Adam**
**Appleyard Lees**
**15 Clare Road**
**Halifax, Yorkshire HX1 2HY (GB)**

(54) **MULTIPLE VIEWPOINT IMAGE DISPLAY DEVICE**

(57) A multi-viewpoint image display device is provided, which includes an image panel including a plurality of pixels configured to be arranged in a plurality of rows and columns, a backlight unit configured to provide light to the image panel, a parallax portion configured to be arranged in front of the image panel, and a mask portion configured to be arranged between the image panel and the backlight unit to partially mask the plurality of pixels. Accordingly, resolution balance can be matched without interference.

## FIG. 2

EP 2 682 805 A2

## Description

## TECHNICAL FIELD

The present disclosure relates generally to a multi-viewpoint image display device, and more particularly to a multi-viewpoint image display device, which performs partial masking of pixels using a mask area.

## BACKGROUND ART

With the development of electronic technology, various types of electronic devices have been developed and spread. Particularly, in recent several years, display devices, such as TVs, which are home appliances mainly used in general home, have been developed at high speed.

As the performances of display devices have been advanced, the kinds of content that are displayed on the display device have also been increased. In particular, stereoscopic 3D display systems which can display even 3D content have recently been developed and spread.

3D display devices may be implemented by not only 3D TVs used in general home but also diverse types of display devices, such as monitors, mobile phones, PDAs, set-top PCs, tablet PCs, digital photo frames, and kiosk. Further, 3D display technology may be used not only for home use but also in diverse fields that require 3D imaging, such as science, medicine, design, education, advertisement, and computer games.

The 3D display system is briefly classified into a non-glasses type system that is viewable without glasses and a glasses type system that is viewable through wearing of glasses. The glasses type system can provide a satisfactory 3D effect, but a viewer should wear glasses to cause inconvenience. By contrast, the non-glasses type system has the advantage that the viewer can view a 3D image without glasses, and development of such a non-glasses type system has been continuously discussed.

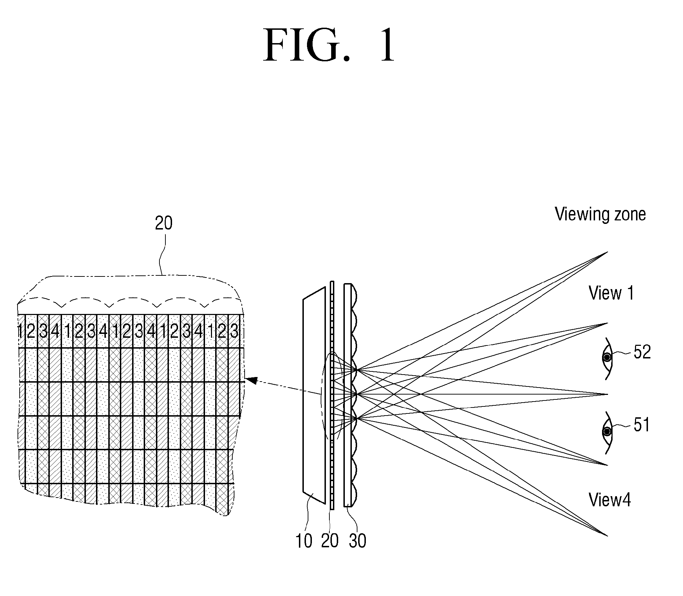

Fig. 1 is a view illustrating the configuration of a non-glasses type 3D display device in the related art. Referring to Fig. 1, the 3D display device in the related art includes a backlight unit 10, an image panel 20, and a parallax portion 30.

The parallax portion may include a slit array of opaque shield that is known as a parallax barrier or a lenticular lens array. In Fig. 1, the parallax portion is implemented by a lenticular lens array.

Referring to Fig. 1, the image panel 20 includes a plurality of pixels that are grouped into a plurality of columns. An image at a different viewpoint is arranged for each column. Referring to Fig. 1, a plurality of images 1, 2, 3, and 4 at different viewpoints are repeatedly arranged in order. That is, the respective pixel columns are arranged as numbered groups 1, 2, 3, and 4. A graphic signal that is applied to the panel is arranged in a manner that pixel column 1 displays a first image, and pixel column 2 displays a second image.

The backlight unit 10 provides light to the image panel 20. By light that is provided from the backlight unit 10, images 1, 2, 3, and 4, which are formed on the image panel 20, are projected onto the parallax portion 30, and the parallax portion 30 distributes the respective projected images 1, 2, 3, and 4 and transfers the distributed images in a direction toward the viewer. That is, the parallax portion 30 generates exit pupils at the viewer's position, that is, at a viewing distance. The thickness and diameter of a lenticular lens in the case where the parallax portion is implemented by the lenticular lens array and the slit spacing in the case where the parallax portion is implemented by the parallax barrier may be designed so that the exit pupils that are generated by the respective columns are separated in an average inter-pupillary distance of less than 65 mm. The separated image lights form respectively viewing areas. That is, as illustrated in Fig. 1, viewing areas 1, 2, 3, and 4 are formed.

In this state, if the user's left eye 51 is positioned in the viewing area 3 and the right eye 52 is positioned in the viewing area 2, the user can feel the 3D effect even without special glasses.

However, in the 3D display device in the related art, since a plurality of images are separated by vertical columns to be displayed, the vertical resolution is maintained as it is, but the horizontal resolution is greatly reduced. For example, in the case where an XGA panel having 1024x 768 resolution is applied to a 4-viewpoint 3D display device, the resolution becomes 256x768. As a result, the display has a full panel resolution in the vertical direction, but has 1/4 resolution in the horizontal direction.

In order to solve this problem, USP 6,118,584 discloses that a loss of resolution between vertical and horizontal resolutions is dispersed through changing the pixel arrangement. However, this technology has the problem that an LCD panel in the related art having a general pixel arrangement is unable to be used for such technology.

Another method to solve the above-described problem is disclosed in USP 6,064,424. According to this method, however, due to the difference in arrangement between the pixel columns and the lenticular, light emitted from other pixels overlap each other, and crosstalk occurs between the images. "Crosstalk" means a phenomenon that the (N+1)-th or (N-1)-th image is mixed and shown through the user's right or left eye in addition to the N-th image. In this case, the same object is shown in other views, and if the crosstalk occurs, several contours of the object appear with blurring. Accordingly, if the crosstalk is increased, the picture quality is deteriorated.

According to the related art as described above, it is unable to effectively solve the above-described problem of the deterioration of the horizontal resolution.

# DISCLOSURE

## TECHNICAL PROBLEM

The present disclosure has been made to address the above problems. Accordingly, an aspect of the present disclosure provides a multi-viewpoint image display device, which can effectively disperse a loss of resolution between the vertical resolution and the horizontal resolution.

## TECHNICAL SOLUTION

According to one aspect of the present disclosure, a multi-viewpoint image display device includes an image panel including a plurality of pixels configured to be arranged in a plurality of rows and columns; a backlight unit configured to provide light to the image panel; a parallax portion configured to be arranged in front surface of the image panel; and a mask portion configured to be arranged between the image panel and the backlight unit to partially mask the plurality of pixels.

Here, the mask portion may include a plurality of mask areas configured to correspond to the plurality of pixels, each of the plurality of mask areas may be divided in a vertical direction into a light-transmitting area and a light-blocking area, and the light-blocking area may be arranged in zigzag with respect to the pixels arranged in a row direction.

The light-blocking area may have a size of one half of the corresponding pixel, and the light-transmitting area may have a size of the other half of the corresponding pixel.

The plurality of mask areas may be aligned as a plurality of columns, and the direction of the zigzag arrangement of the light-blocking area may be reversed for each of the columns of the respective mask areas.

Even in this case, the light-blocking area may have a size of one half of the corresponding pixel, and the light-transmitting area may have a size of the other half of the corresponding pixel.

The mask portion may include a plurality of mask areas configured to correspond to the plurality of pixels, each of the plurality of mask areas may be divided into a light-transmitting area and a light-blocking area, and the light-transmitting area may be formed in a diagonal direction in the respective mask areas.

The mask portion may include a plurality of mask areas configured to correspond to the plurality of pixels, each of the plurality of mask areas may be divided into a light-transmitting area and a light-blocking area, the light-transmitting area may be formed to be connected in a diagonal direction in at least two of the mask areas that are arranged in parallel in a row direction among the plurality of mask areas, and the light-blocking area may be formed in a remaining area except for the light-transmitting area in the mask area.

The mask portion may include a plurality of mask areas configured to correspond to the plurality of pixels, each of the plurality of mask areas may be divided into a light-transmitting area and a light-blocking area, the light-transmitting area may be formed in a diagonal direction in the plurality of mask areas, and the light-transmitting areas formed in the respective mask areas may be connected to each other.

The image panel may be a UD (Ultra Definition) panel that does not include a color filter.

The image panel may sequentially display color signals for each pixel according to an FSC (Field Sequential Color) method, and the backlight unit may provide a plurality of different color lights to the respective pixels in the image panel in synchronization with a display operation of the image panel.

The image panel may display a multi-viewpoint image through combining the plurality of pixels included in the plurality of continuous rows and columns.

The image panel may display a 12-viewpoint image through combining 6 pixels continuously arranged in a horizontal direction and two pixels continuously arranged in a vertical direction.

The parallax portion may include a lenticular lens of which a plurality of lens areas are arranged in a column direction, and the width of each of the lens areas corresponds to the size of each of the plurality of pixels.

The parallax portion may include a parallax barrier of which a plurality of barrier areas are arranged in a column direction, and the width of each of the barrier areas may correspond to the size of each of the plurality of pixels.

## ADVANTAGEOUS EFFECTS

According to the various embodiments of the present disclosure as described above, the loss of resolution is appropriately dispersed in the vertical and horizontal directions while the multi-viewpoint image is provided, and thus the deterioration of the picture quality can be prevented.

## DESCRIPTION OF DRAWINGS

The above and other aspects, features and advantages of the present disclosure will be more apparent from the following detailed description when taken in conjunction with the accompanying drawings, in which:

Fig. 1 is a view illustrating the configuration of a non-glasses type 3D display device in the related art;
Fig. 2 is a view illustrating the configuration of a multi-viewpoint image display device according to an embodiment of the present disclosure;
Figs. 3 to 6 are views illustrating the configuration of a mask pattern according to various embodiments of the present disclosure;
Fig. 7 is a view illustrating the detailed configuration of a multi-viewpoint image display device;

Fig. 8 is a view illustrating the detailed view of a mask portion;

Fig. 9 is a view illustrating another example of the detailed configuration of the multi-viewpoint image display device;

Fig. 10 is a view explaining the operation of a mask pattern;

Fig. 11 is a view explaining a method for displaying a multi-viewpoint image on an image panel having a color filter;

Fig. 12 is a view explaining the operation of a multi-viewpoint image display device according to an FSC method;

Fig. 13 is a view explaining a method for displaying a multi-viewpoint image using a plurality of pixels;

Fig. 14 is a view explaining a multi-viewpoint image displayed by the method of Fig. 13;

Fig. 15 is a view explaining a multi-viewpoint display method according to an FSC method; and

Fig. 16 is a view illustrating another configuration example of a mask portion.

## BEST MODE FOR INVENTION

Hereinafter, preferred embodiments of the present disclosure will be described in detail with reference to the accompanying drawings.

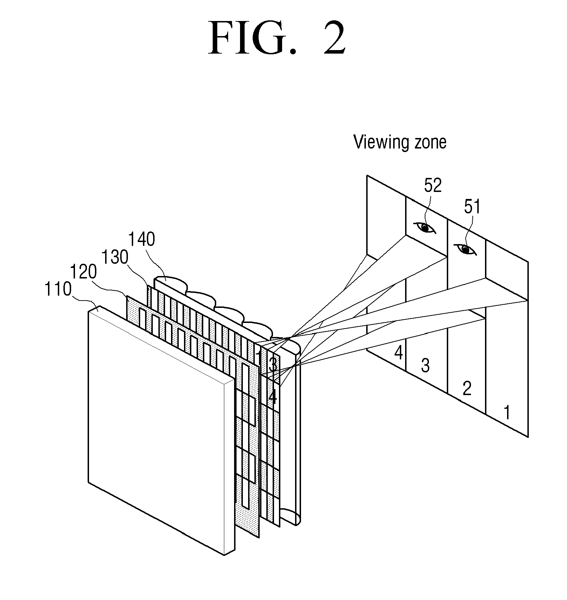

Fig. 2 is a view illustrating the configuration of a multi-viewpoint image display device according to an embodiment of the present disclosure. A multi-viewpoint image display device of Fig. 2 is a device that performs a stereoscopic display in a non-glasses method. The multi-viewpoint image display device of Fig. 2 may be implemented by various types of display devices, such as TVs, monitors, mobile phones, PDAs, set-top PCs, tablet PCs, digital photo frames, and kiosk.

Referring to Fig. 2, the multi-viewpoint image display device includes a backlight unit 110, a mask portion 120, an image panel 130, and a parallax portion 140.

The backlight unit 110 provides light in the direction of the image panel 130. The backlight unit 110 is divided into a direct type and an edge type depending on where light emitting elements are positioned. According to the direct type, the light emitting elements are uniformly arranged on the rear surface of the image panel 130 to directly emit light to the image panel 130. By contrast, according to the edge type, the light emitting elements are arranged on the edge side of the image panel 130 to reflect light in the direction of the image panel 130 using a light guide plate.

The backlight unit 110 may be a general backlight unit that is typically applied to the LCD panel or a color sequential backlight unit that is applied to an FSC (Field Sequential Color) LCD display. That is, the kind of the backlight unit 110 may differ depending on the kind of the image panel 130.

The image panel 130 includes a plurality of pixels arranged in a plurality of rows and columns. The image panel 130 may be implemented by an LCD panel, and each of the plurality of pixels may be implemented by a liquid crystal cell. If light generated from the backlight unit 110 is incident to the respective pixels of the image panel 130, the image panel 130 adjusts the transmission rate of the light incident to the pixels in accordance with an image signal, and displays an image. Specifically, the image panel 130 includes a liquid crystal layer and two electrodes that are formed on both surfaces of the liquid crystal layer. If a voltage is applied to the two electrodes, an electric field is generated to move molecules of the liquid crystal layer, and thus the transmission rate of the light is adjusted. The image panel 130 divides the respective pixels by columns, and drives the respective pixel columns so that different viewpoint images are displayed for the respective columns.

The image panel 130 may be a general panel having with a color filter, or a panel that operates in an FSC (Field Sequential Color) driving method. The FSC driving method may be differently called a field sequential method or a color sequential driving method. The FSC driving method is a method of temporarily dividing R, G, and B lights and sequentially projecting the divided lights without using the color filter.

The parallax portion 140 is arranged in front of the image panel 130 to disperse the light that is emitted from the image panel 130 to viewing areas. Accordingly, light that corresponds to different viewpoint image by viewing areas is emitted. The parallax portion 140 may be implemented by a parallax barrier or a lenticular lens array. The parallax barrier is implemented by a transparent slit array including a plurality of barrier areas. Accordingly, the parallax barrier operates to emit different viewpoint image lights by viewing areas through blocking of the light through the slits between the barrier areas. The width and pitch of the slit may be differently designed depending on the number of viewpoint images included in the multi-viewpoint image and the viewing distance. The lenticular lens array includes a plurality of lens areas. Each lens area is formed with a size that corresponds to at least one pixel column, and differently disperses the light transmitting the pixels of the respective pixel columns by viewing areas. Each lens area may include a circular lens. The pitch and the curvature radius of the lens may be differently designed depending on the number of viewpoint images and the viewing distance.

Fig. 2 illustrates the parallax portion 140 that is implemented by a lenticular lens array, but is not limited thereto.

The parallax portion 140 is arranged to coincide with the column direction of the respective pixels provided on the image pixel 130.

The mask portion 120 partially masks the respective pixels of the image panel 130. Specifically, the mask portion 120 is arranged between the backlight unit 110 and the image panel 130 to partially block the light incident to the respective pixels. The mask portion 120 is divided into a plurality of mask areas.

The mask portion 120 may be arranged as close as possible to the rear surface of the image panel 130. The mask portion 120 may be formed on the rear surface of the image panel 130 or may be arranged on the rear surface side of the image panel 130 in a state where the mask portion 120 is formed on a separate substrate. The light-transmitting area may be made through etching of a layer of an opaque material, such as metal, laminated on a glass substrate. The mask portion 120 does not serve as a parallax barrier.

The mask portion 120 may be implemented to have various shapes depending on the embodiments.

Through the mask portion 120, the parallax portion 140 may provide selective viewing of the respective pixels. That is, the mask portion 120 makes the light that corresponds to a part of different viewpoint images be emitted to the side of the parallax portion 140 through partially masking the plurality of pixels that belong to the same column on the image panel 130. The parallax portion 140 provides an image which is focused on a position that is apart for a predetermined distance so-called a viewing distance. The position where the image is formed is called a viewing area. In Fig. 2, four viewing areas 1, 2, 3, and 4 are illustrated. Accordingly, if the user's left eye 51 is positioned in the viewing area 2 and the right eye 52 is positioned in the viewing area 3, the user can feel the 3D effect. By contrast, the eye that is positioned in the viewing area 3 can view the image displayed at number 2, but is unable to view other images. The eye has similar characteristics in other viewing areas. On the other hand, since the parallax portion 140 is arranged along the column direction, it is unable to exert an influence in the vertical direction, and the viewing area is extended in the horizontal direction. Since the parallax portion 140 is arranged along the pixel columns of the image panel 130, left and right crosstalk does not occur in the display device.

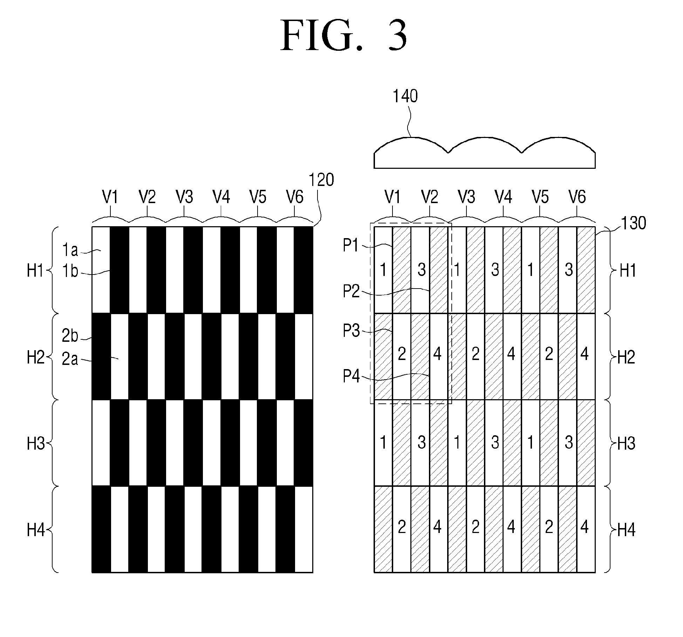

Figs. 3 to 6 are views illustrating various configuration examples of the mask portion.

Fig. 3 indicates the configuration of the mask portion 120, and corresponding image panel 130 and parallax portion 140. As illustrated, the mask portion 120 includes a plurality of mask areas that are arranged in a plurality of rows H1, H2, H3, and H4 and columns V1 to V6. Each mask area includes a light-transmitting area and a light-blocking area. According to Fig. 3, each mask area is divided in the vertical direction, and thus is divided into the light-transmitting area and the light-blocking area. Further, the light-blocking area is arranged in zigzag with respect to the pixels arranged in the row direction. Specifically, in the mask area that is positioned at row 1 and column 1, the light-transmitting area 1a is arranged on the left side, and the light-blocking area 1b is arranged on the right side. In the mask area positioned at row 2 and column 1, the light-transmitting area 2a is arranged on the right side, and the light-blocking area 1b is arranged on the left side. In Fig. 3, the light-blocking area 1b or 2b of the mask portion 120 has a size of one half of the corresponding pixel, and the light-transmitting area 1a or 2a has a size of the other half of the corresponding pixel.

In Fig. 3, the image panel operates according to the configuration of the mask portion 120. According to Fig. 3, in the image panel 120, four pixels p1, p2, p3, and p4 that are positioned in 2x2 matrix indicate different viewpoint images. Each pixel corresponds to the size of one mask area. Further, each lens area of the parallax portion 140 that is implemented by the lenticular lens array has a size that corresponds to two pixel columns V1&V2, V3&V4, and the like. As illustrated as Fig. 3, the image panel 130 displays a multi-viewpoint image through combining the plurality of pixels included in the plurality of continuous rows and columns. According to Fig. 3, four pixels included in two rows and two columns display images of 1, 2, 3, and 4 viewpoints. In this case, the right half area of the pixels P 1 and P2 of row 1 is masked, and the left half area, and the left half area of the pixels P3 and P4 of row 2 is masked. Accordingly, the light corresponding to the image is emitted through the non-masked areas in the respective pixels. The non-masked areas appear to be arranged in the order of a checker board. That is, as illustrated in Fig. 2, four pixel light bundles are formed in the viewing area.

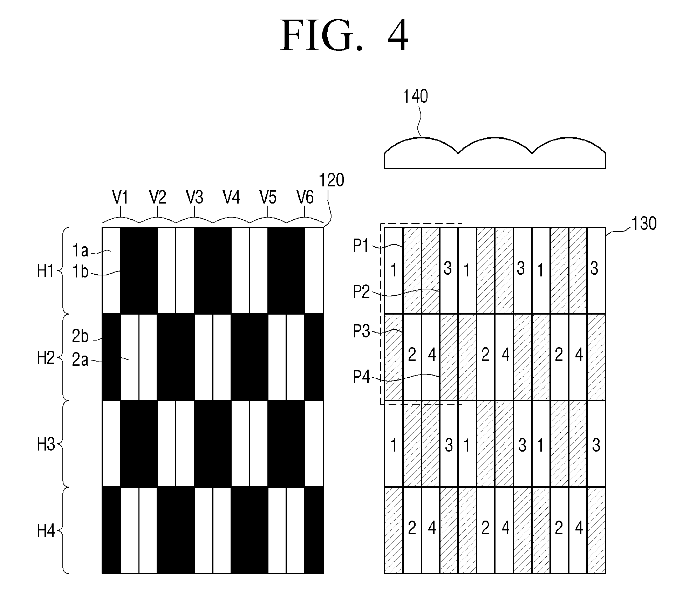

Fig. 4 illustrates another configuration example of the mask portion. According to Fig. 4, the mask portion 120 includes a plurality of mask areas that are arranged in the plurality of rows H1, H2, H3, and H4 and columns V1 to V6. Each mask area includes a light-transmitting area and a light-blocking area. According to Fig. 4, each mask area of the mask portion 120 is divided in the vertical direction, and thus is divided into light-transmitting areas 1a and 2a and light-blocking areas 1b and 2b. Further, the light-blocking areas are arranged in zigzag with respect to the pixels arranged in the row direction. Further, the positions of the light-blocking areas differ by columns. That is, as illustrated as Fig. 4, the direction of the zigzag arrangement of the light-blocking areas may be reversed for the respective columns of the mask areas. Accordingly, in the column V1, the light-blocking areas are arranged in the order of right, left, right, and left, and in the column V2, the light-blocking areas are arranged in the order of left, right, left, and right.

In Fig. 4, image panel 120 operates according to the configuration of the mask portion 120 as shown as Fig. 4. According to Fig. 4, images of 1, 2, 3, and 4, viewpoints are displayed by four pixels P1, P2, P3, and P4 dispersed and arranged at row 2 and column 2. Accordingly, 4-view display becomes possible.

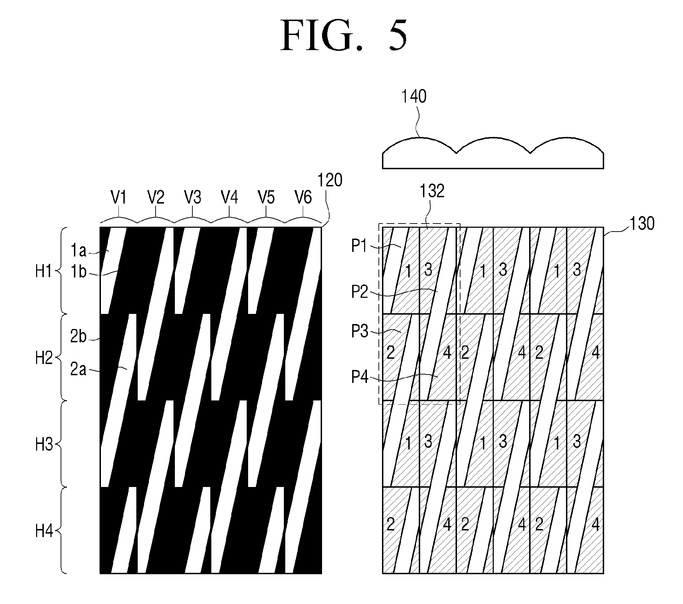

Fig. 5 illustrates still another configuration example of the mask portion. According to Fig. 5, the mask portion 120 includes a plurality of mask areas that are arranged in the plurality of rows H1, H2, H3, and H4 and columns V1 to V6. Each mask area includes a light-transmitting area and a light-blocking area. In the mask area, the light-transmitting areas 1a, 2a, and 3a are formed in a diagonal direction, and the light-blocking areas 1b, 2b, and 3b are formed in the remaining areas.

Referring to Fig. 5, at least two mask areas that are arranged one by one in the row direction among the plurality of mask areas are connected in a diagonal direction. That is, the light-transmitting areas 2a and 3a at row 1 and columns 2 and 3 are connected to each other, and the light-transmitting areas at the next row and the row after next are connected to each other. However, such connections are not limited to those illustrated in Fig. 5, and each light-transmitting area may be formed in a diagonal direction for one mask area.

According to Fig. 5, in the image panel 130, different viewpoint images are displayed on four pixels P1, P2, P3, and P4 that are included in two rows and two columns. A part of each image is masked by the light-blocking area, and only a part of the light is emitted to the viewer side.

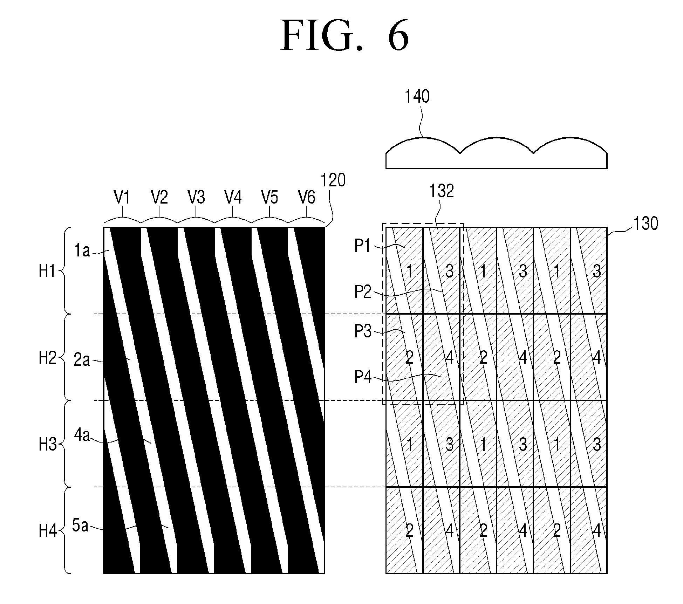

Fig. 6 illustrates still another configuration example of the mask portion. According to Fig. 6, in the same manner as that in Fig. 5, the light-transmitting areas are formed in a diagonal direction in the respective mask areas, and in particular, the light-transmitting areas are continuously connected in the row direction. According to Fig. 6, the light-transmitting area 1a and 2a in the mask area that is positioned at first and second rows of the first column are connected to the light-transmitting areas 4a and 5a of the mask area that is positioned at the third and fourth rows of the second column.

According to Fig. 6, in the image panel 130, images of different viewpoints 1, 2, 3, and 4 are displayed on four pixels P1, P2, P3, and P4 that are dispersed in two rows and two columns.

In Figs. 5 and 6, an inclination angle of the light-transmitting area in the mask area may be diversely set. As an example, the inclination angle θ may b calculated using the following equation.

$$\theta = A\tan(P_h/(NP_v))$$

Here, $P_h$ denotes a horizontal pitch of the image panel, $P_v$ denotes a vertical pitch of the image panel, and N denotes the number of rows in a basic set of pixels. In Figs. 3 to 6, only four rows and six columns are illustrated. However this is for convenience in explanation, and a larger number of rows and columns may be applied to an actual product.

Figs. 3 to 6 illustrate that the parallax portion 140 is implemented by a lenticular lens array. As described above, for example, in order to display four views on the image panel 130, the panel is divided in the unit of 2x2 pixels in the vertical direction. Two upper pixels belong to view 1 and view 3, and two lower pixels belong to view 2 and view 4. The mask portion 120 partially masks the respective pixels. As a result, parts of four pixels are dispersed without overlapping. The lenticular lens array disperses the light emitted from the parts of the pixels. As illustrated, the viewing areas are illustrated in the form of four rectangles which are numbered as 1 to 4. As a result, if the original resolution of the panel is 1024x768 (XGA), each of four views may be displayed with the resolution of 512×384. That is, reduction of the resolution is dispersed to the vertical resolution and the horizontal resolution. Further, since the lenticular lenses are arranged along the pixel columns and the illuminated half pixel area does not overlap vertical projection, no interference occurs between the respective views.

As described above, the parallax portion 140 may be implemented by a parallax barrier. The parallax barrier may have a structure in which the plurality of barrier areas are arranged in the column direction. In this case, the width of the barrier area may be the size that corresponds to the size of the plurality of pixels. Since the operation in the embodiment where the parallax portion 140 is implemented by the parallax barrier is similar to the operation of the display device having the lenticular lens array as described above, the duplicate explanation and illustration will be omitted.

As described above, the image panel 130 may be a general panel having a color filter, or may be a panel that operates in the FSC (Field Sequential Color) driving method.

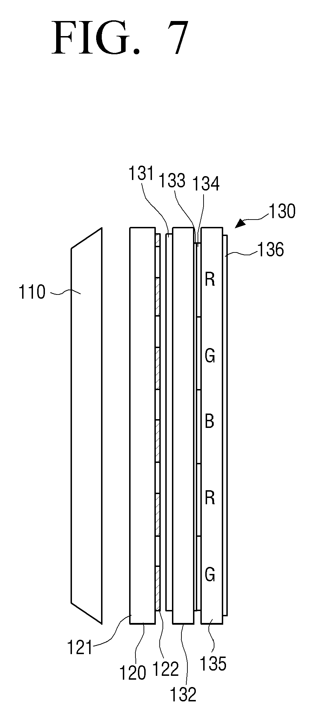

Fig. 7 illustrates the configuration of a display device having the color filter. Fig. 7 is a cross-sectional view as seen from the upper side of the display device to the lower side thereof. Although the parallax portion 140 is omitted In Fig. 7, the parallax portion may be formed on the front surface of the image panel 130.

Referring to Fig. 7, the image panel 130 includes a rear polarizer 131, a rear surface 132, a liquid crystal layer 133, a color filter 134, a front substrate 135, and a front polarizer 136.

If white light, which is emitted from the backlight unit 110 and penetrates the mask portion 120, is incident to the rear polarizer 131, the rear polarizer 131 passes only the light in a predetermined polarization direction. The penetrating light is changed to the light having different attributes depending on the transmission rate of the respective liquid crystals and the color value as the light passes through the rear substrate 132, the liquid crystal layer 133, the color filter 134, and the front substrate 135, and then is emitted through the front polarizer 136. The emitted light is dispersed by the parallax portion and is provided to a plurality of viewing areas.

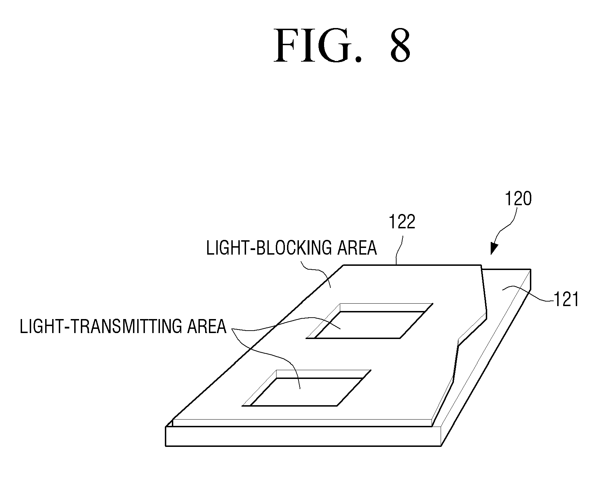

Further, the mask portion 120 includes a mask substrate 121 and a mask pattern 122. The detailed shape of the mask portion 120 is shown in Fig. 8. Referring to Fig. 8, the mask 122 is formed on the surface of the mask substrate 121 in a state where a predetermined area thereof is open. As illustrated in Figs. 3 to 6, the size, shape, and position of the open area may be differently determined in various embodiments. The respective light-transmitting areas may be filled with a transparent material.

If the number of light-transmitting areas is counted in the horizontal direction, it may be equal to or larger than the number of pixel columns of the image panel. The horizontal size of the light-transmitting area is smaller than the horizontal size of the pixel of the image panel. For example, as illustrated in Figs. 3 and 4, it may correspond to the size of about a half of the pixel. Further, the images that correspond to four viewpoints may be displayed on the LCD panel so that the images are arranged on a 2x2 pixel group having two rows and two columns as illustrated in Figs. 3 to 6. This arrangement is different from the arrangement in the related art on the point of the corresponding pixel arrangement. According to the pixel arrangement for expressing 4-viewpoint images in the related art, the horizontal resolution is reduced to 1/4, and thus the picture quality is deteriorated. However, according to the 2x2 pixel arrangement according to the present disclosure, the vertical and horizontal resolutions are respectively reduced to 1/2, and thus the degree of deterioration of the picture quality can be reduced in comparison to that in the related art. The number of light-transmitting area may be equal to the number of pixels, or may be designed as a value obtained by multiplying the number of pixels by a predetermined natural number.

As illustrated in Figs. 5 and 6, the light-transmitting areas may be aligned along a line in a state where the light-transmitting areas are inclined at a predetermined angle with respect to the respective pixel columns of the image panel. The light-transmitting areas, which are arranged along the same line, may be united into a transparent line. The number of lines may be equal to the number of the respective pixel columns of the image panel 130. Further, the number of lines may be determined according to the number of 3D views and the arrangement of the image pixels.

On the other hand, in order to partially recycle the light, the light emitted from the backlight unit 110 may be reflected to the backlight unit 110 by the opaque area of the mask 121, that is, the light-blocking area, to be recycled. The details thereof will be described later.

Various sizes and shapes of the respective constituent elements of the image panel 130 may be set. For example, the color filter 134 may have a thickness of 0.4 to 0.7 mm. The rear polarizer 131 and the front polarizer 136 may be implemented in the form of a film having a thickness of 0.15 to 0.2 mm.

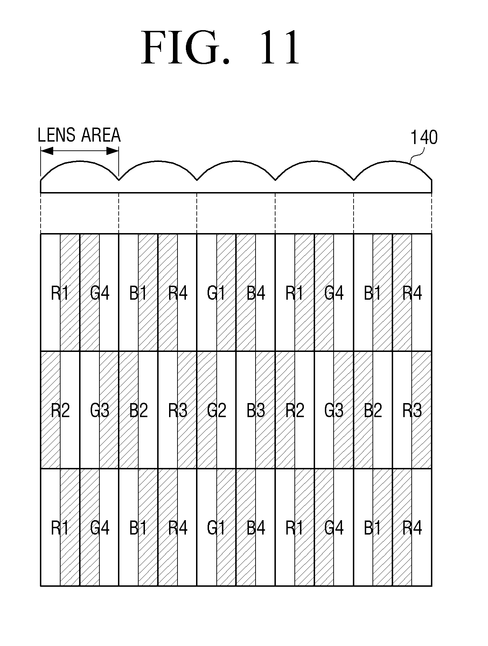

The color filter 134 is a configuration that is adopted in the case where the image panel 130 is not of a color sequential type, and means an RGB color filter. Data mapping by colors using the color filter 134 is illustrated in Fig. 11. Color pixels that correspond to the color columns are indicated as R, G, and B.

In order to reduce the distance between the mask 122 and the pixel plane, the mask portion 120 is coupled so that the surface of the mask substrate 121, on which the mask 122 is formed, faces the rear surface of the image panel 130.

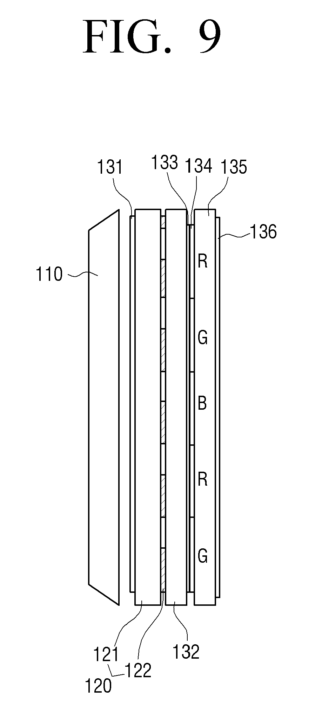

On the other hand, in order to further reduce the distance between the mask 122 and the pixel plane, the mask portion 120 may be mounted inside the image panel 130. An example of such a configuration is illustrated in Fig. 9.

Referring to Fig. 9, the rear polarizer 131 is arranged net to the backlight unit 110, and then the mask portion 120 is arranged. Thereafter, the rear surface 132, the liquid crystal layer 133, the color filter 134, the front substrate 135, and the front polarizer 136 may be sequentially arranged. Accordingly, the gap between the mask 122 and the liquid crystal layer 133 can be minimized.

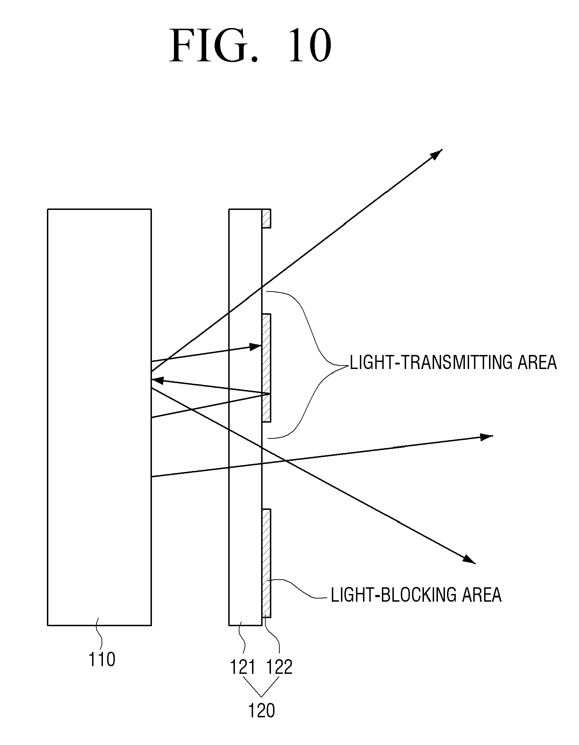

Fig. 10 is a view illustrating a configuration example of the mask portion 120 for recycling a light. Referring to Fig. 10, the mask portion 120 includes a mask substrate 121 and the mask 122.

Of the light emitted from the backlight unit 110, the light that is directed to the light-transmitting area in the mask 122 passes through the light-transmitting area, and the light that is directed to the light-blocking area is reflected to the backlight unit 110. For this, the mask 122 may be made of a material having high reflection rate, or a reflection layer that is made of a material having high reflection rate may be formed on the junction surface between the mask 122 and the mask substrate 121. For example, aluminum may be used.

The light that is reflected by the mask 122 is dispersed by the backlight unit 110, and forms a secondary light. A part of the secondary light is incident to the light-transmitting area to reduce a light loss due to the mask 122.

Further, in the case where a reflective polarizer (not illustrated) is used for the light-transmitting area of the mask 122, the light loss is reduced. The reflective polarizer can reflect the light having polarization that is not used in the LCD display. The polarization of the reflected light becomes extinct in the backlight by the scattering, and thus the light that is incident again to the mask has an appropriate polarization and quantity of light.

Fig. 11 shows an example of a method for mapping color data by pixels in the image panel 130 having a color filter. In Fig. 11, the parallax portion 140 is implemented by a lenticular lens array. The lenticular lens array has a plurality of lens areas each of which has a size corresponding to two pixel columns.

The image panel 130 displays data of different colors with respect to four pixels that are dispersed to two pixel columns and two pixel rows. Accordingly, R, G, and B are uniformly provided with respect to the same viewing area. That is, in the first row, R1, B1, and G1 are respectively displayed on the pixels of the first, third, and fifth pixel columns. R1, B1, and G1 are provided to one of the plurality of viewing areas. For example, in an environment as shown in Fig. 2, if it is assumed that the pixels that display R1, B1, and G1 are provided to the viewing area 3, the user's right eye 52 that is positioned in the viewing area 3 recognizes one color image by the R1, B1, and G1.

As described above, the image panel 130 may be implemented in the form that does not have a color filter. In order to provide a color image without the color filter, the backlight unit 110 may operate in the FSC method.

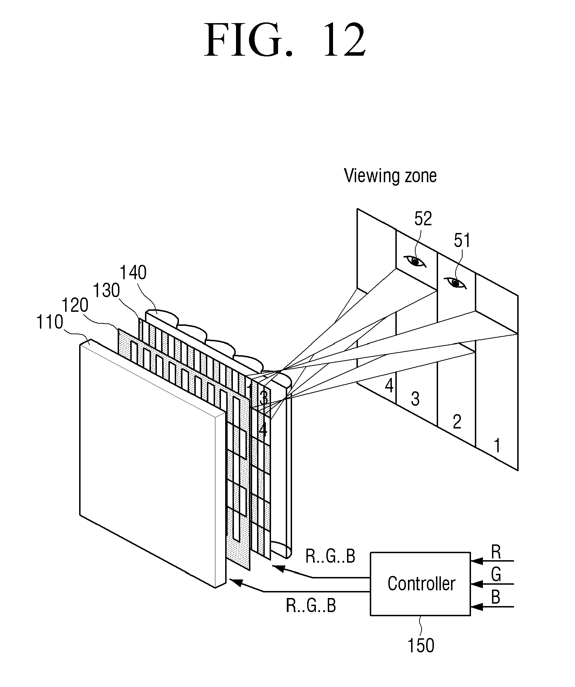

Fig. 12 is a view illustrating the configuration of a display device driven in the FSC method. Referring to Fig. 12, the display device 100 further includes a controller 150 for controlling the FSC driving.

The controller 150 receives parallel RGB data, and sequentially provides color signal for each pixel to the image panel 130. The controller 150 controls the image panel 130 to sequentially display the color signals for each pixel in the FSC method.

Further, the controller 150 controls the backlight unit 110 to provide a plurality of different color lights, that is, R, G, and B lights to the pixels in the image panel 130 in synchronization with the display operation of the image panel 130. Accordingly, a color image can be realized using a light source included in the backlight unit 110 without the color filter. Accordingly, it is not necessary to provide R, G, and B sub-pixels for each pixel, and as a result, the horizontal resolution can be increased to prevent the deterioration of the resolution due to the multi-viewpoint image display.

For example, in the case of an FHD (Full High Definition) panel, the horizontal resolution can be increased from 1920 to 5760. In the case of using an image panel 130 of a UD (Ultra Definition, 3840×2160) class, the FHD (Full High Definition) image having resolution of 1920×1080 can be implemented even though 12-view 3D display is performed. That is, both the 2D and 3D images can be viewed in the FHD class.

By contrast, if 9-view 3D display is performed on the FHD panel having the resolution of 1920×1080 and having the color filter, 640x360 resolution (SD (Standard Definition)) class image is displayed. In the case of performing 9-view 3D display using the UD panel, 1280×720 (HD class) image is displayed. Accordingly, through driving in the FSC method, more-viewpoint 3D display having better resolution can be implemented.

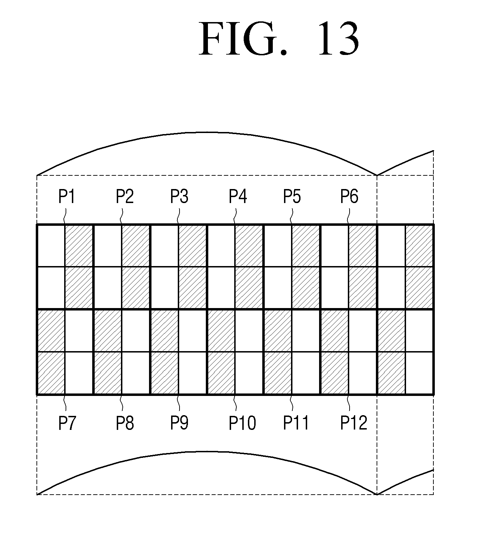

Fig. 13 illustrates a configuration example of an image panel in a display device implemented in the FSC method. Referring to Fig. 13, the parallax portion 140 is implemented by a lenticular lens array, and the width of one lens area has a size corresponding to horizontal size of 6 pixel columns.

Referring to Fig. 13, the image panel 130 provides 12-view images using 12 pixels P1 to P12 in total, which is dispersed to two pixel rows and 6 pixel columns.

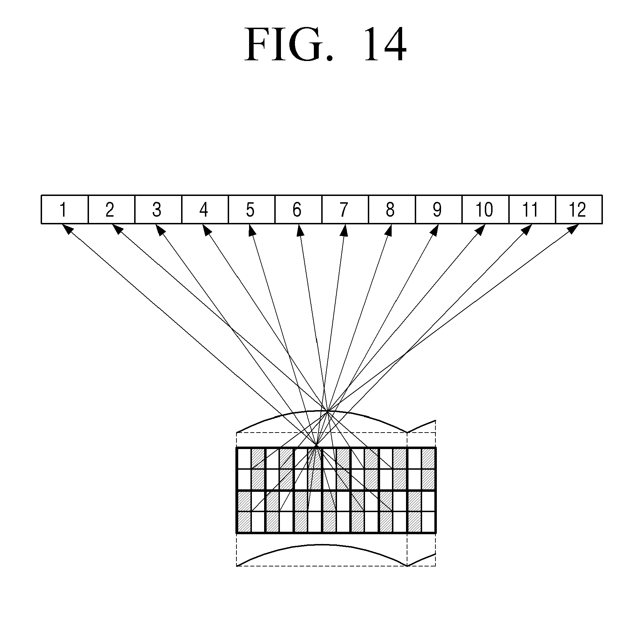

Fig. 14 illustrates an example of 12-view images. Referring to Fig. 14, the pixels P1 to P12 are masked in a zigzag form, and light that corresponds to parts of images that are displayed on the respective pixels P1 to P12 is dispersed and provided to 12 viewing areas. Accordingly, crosstalk can be reduced by viewpoints in the respective viewing areas, that is, 3D areas. As described above, the masking can be performed in various forms as shown in Figs. 3 to 6. In the case of 2D, a 2D screen can be implemented by applying one piece of image information to 12 entire pixels. As described above, if the image panel 130 is implemented by the UD panel, from which the color filter is removed, as described above, the 2D or 3D image can be simultaneously or individually driven.

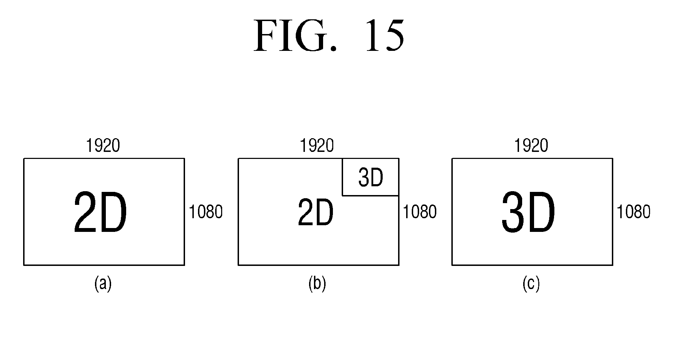

Fig. 15 illustrates views explaining various content display methods using the FSC type image panel. Referring to (a) and (c) of Fig. 15, the display device may provide 2D or 3D content with 1920×1080 resolution, or may display a multi-view as shown in (b) of Fig. 15. Specifically, as illustrated in (b) of Fig. 15, 3D content may be displayed only one area on the screen and 2D contents may be displayed on the other area in a PIP (Picture In Picture) method. By contrast, both the 2D and 3D content may be displayed together in the opposite method.

In the above-described embodiments, it is described that the mask portion 120 is arrange between the backlight unit 110 and the image panel 130, but is not limited thereto. That is, the mask portion 120 may be built in the image panel 130, or may be arranged on the front surface side of the image panel.

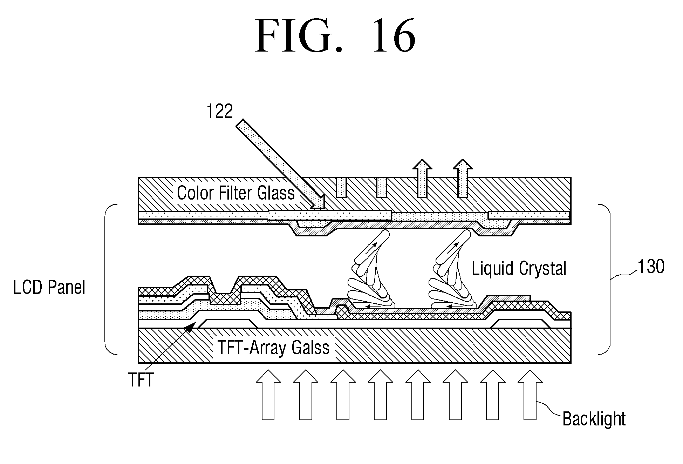

Fig. 16 illustrates the configuration of an image panel of a display device according to another embodiment of the present disclosure. Referring to Fig. 16, the mask 122 is formed on the color filter glass side in the image panel 130, and is arranged to cover only a part of the liquid crystal portion. The size and the shape of the mask may be variously changed in the embodiments illustrated in Figs. 3 to 6. Accordingly, the light provided from the backlight unit 110 is transferred to the liquid crystals as it is, and the light projected from the liquid crystals is blocked by the mask 122, so that the interference between the respective viewpoint images can be reduced. In this case, the mask 122 itself corresponds to the above-described mask portion 120.

FIG. 16 illustrates that only the mask 122 is built in the image panel 130. However, the mask substrate 121 may also be mounted in the image panel 130. Further, the mask portion 120 may be attached to the front surface of the image panel 130.

According to various embodiments of the present disclosure as described above, the loss of resolution between the vertical and horizontal resolutions is dispersed, and thus the loss of resolution is prevented from leaning to one side only. Further, since the light for the respective viewpoints overlap each other, the crosstalk can be prevented from occurring.

While the disclosure has been shown and described with reference to certain embodiments thereof, it will be understood by those skilled in the art that various changes in form and detail may be made therein without departing from the spirit and scope of the present disclosure, as defined by the appended claims.

## Claims

1. A multi-viewpoint image display device comprising:

    an image panel including a plurality of pixels configured to be arranged in a plurality of rows and columns;
    a backlight unit configured to provide light to the image panel;
    a parallax portion configured to be arranged in front surface of the image panel; and
    a mask portion configured to be arranged between the image panel and the backlight unit to partially mask the plurality of pixels.

2. The multi-viewpoint image display device as claimed in claim 1, wherein the mask portion comprises a plurality of mask areas configured to correspond to the plurality of pixels, each of the plurality of mask areas is divided in a vertical direction into a light-transmitting area and a light-blocking area, and the light-blocking area is arranged in zigzag with respect to the pixels arranged in a row direction.

3. The multi-viewpoint image display device as claimed in claim 2, wherein the light-blocking area has a size of one half of the corresponding pixel, and the light-transmitting area has a size of the other half of the corresponding pixel.

4. The multi-viewpoint image display device as claimed in claim 2, wherein the plurality of mask areas are aligned as a plurality of columns, and the direction of the zigzag arrangement of the light-blocking area is reversed for each of the columns of the respective mask areas.

5. The multi-viewpoint image display device as claimed in claim 4, wherein the light-blocking area has a size of one half of the corresponding pixel, and the light-transmitting area has a size of the other half of the corresponding pixel.

6. The multi-viewpoint image display device as claimed in claim 1, wherein the mask portion comprises a plurality of mask areas configured to correspond to the plurality of pixels, each of the plurality of mask areas is divided into a light-transmitting area and a light-blocking area, and the light-transmitting area is formed in a diagonal direction in the respective mask areas.

7. The multi-viewpoint image display device as claimed in claim 1, wherein the mask portion comprises a plurality of mask areas configured to correspond to the plurality of pixels, each of the plurality of mask areas is divided into a light-transmitting area and a light-blocking area, the light-transmitting area is be formed to be connected in a diagonal direction in at least two of the mask areas that are arranged in parallel in a row direction among the plurality of mask areas, and the light-blocking area is formed in a remaining area except for the light-transmitting area in the mask area.

8. The multi-viewpoint image display device as claimed in claim 1, wherein the mask portion comprises a plurality of mask areas configured to correspond to the plurality of pixels, each of the plurality of mask areas is divided into a light-transmitting area and a light-blocking area, the light-transmitting area is formed in a diagonal direction in the plurality of mask areas, and the light-transmitting areas formed in the respective mask areas are connected to each other.

9. The multi-viewpoint image display device as claimed in any one of claims 1 to 8, wherein the image panel is a UD (Ultra Definition) panel that does not include a color filter.

10. The multi-viewpoint image display device as claimed in any one of claims 1 to 8, wherein the image panel sequentially displays color signals for each pixel according to an FSC (Field Sequential Color) method, and the backlight unit provides a plurality of different color lights to the respective pixels in the image panel in synchronization with a display operation of the image panel.

11. The multi-viewpoint image display device as claimed in claim 10, wherein the image panel displays a multi-viewpoint image through combining the plurality of pixels included in the plurality of continuous rows and columns.

12. The multi-viewpoint image display device as claimed in claim 11, wherein the image panel displays a 12-viewpoint image through combining 6 pixels continuously arranged in a horizontal direction and two pixels continuously arranged in a vertical direction.

13. The multi-viewpoint image display device as claimed in claim 11, wherein the parallax portion comprises a lenticular lens of which a plurality of lens areas are arranged in a column direction, and the width of each of the lens areas corresponds to the size of each of the plurality of pixels.

14. The multi-viewpoint image display device as claimed in claim 11, wherein the parallax portion comprises a parallax barrier of which a plurality of barrier areas are arranged in a column direction, and the width of each of the barrier areas corresponds to the size of each of the plurality of pixels.

# FIG. 1

# FIG. 2

# FIG. 3

# FIG. 4

# FIG. 5

# FIG. 6

# FIG. 7

# FIG. 8

# FIG. 9

# FIG. 10

LIGHT-TRANSMITTING AREA

LIGHT-BLOCKING AREA

110

121 122

120

# FIG. 11

LENS AREA

140

| R1 | G4 | B1 | R4 | G1 | B4 | R1 | G4 | B1 | R4 |
|----|----|----|----|----|----|----|----|----|----|
| R2 | G3 | B2 | R3 | G2 | B3 | R2 | G3 | B2 | R3 |
| R1 | G4 | B1 | R4 | G1 | B4 | R1 | G4 | B1 | R4 |

# FIG. 12

Viewing zone

# FIG. 13

P1   P2   P3   P4   P5   P6

P7   P8   P9   P10   P11   P12

# FIG. 14

# FIG. 15

# FIG. 16

**EP 2 682 805 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US P6118584 A
- US P6064424 A